# EUROPEAN PATENT SPECIFICATION

(11) **EP 1 912 163 B1**
(45) Date of publication and mention of the grant of the patent: **29.08.2012**
(21) Application number: 06405435.6
(22) Date of filing: 12.10.2006
(51) Int. Cl.: G06K 19/077, B05B 11/00

(54) **Electronic identifier for cosmetic products and perfumes**
Elektronisches Identifizierungsmittel für kosmetische Produkte und Parfüme
Identifiant électronique pour produits cosmétiques et parfums

(43) Date of publication of application: 16.04.2008
(73) Proprietor: Royal Tag SA, 6933 Muzzano (CH)
(72) Inventor: Oggian, Sileno, 6992 Cimo (CH); Malfanti, Roberto, 6968 Sonvico (CH)
(74) Representative: Fiammenghi-Domenighetti, Delfina

(56) References cited:
- WO-A-2006/070148
- FR-A1- 2 864 035
- US-A1- 2004 124 988

## Description

The present invention relates to a dispenser for cosmetic products and perfumes provided with an identifier as described in the preamble of Claim 1.

This identifier applied to dispensers of perfumes and cosmetic products is used for electronic identification of said products, thus ensuring the traceability of the product along the entire supply chain from the producer to the consumer.

In the perfume and cosmetics sector there exist various ranges of products, varying from mass-consumption products in the lowest price bracket to the most exclusive and refined brands which base their market strategy precisely on the high added value and the exclusive nature of the brand. The wealthy clients who buy these brands appreciate in particular the prestige of the costly products offered and are attracted by their distinctive nature. As a result these brands may be situated in the high-price range. In order to protect these brands from any parallel distribution at lower prices, it is required to provide an identifier means for the product which allows complete traceability thereof. In this way it is possible to monitor one's sales channels and, if necessary, identify products which are found outside the predefined sales channels and determine the reason for this anomaly.

The state of the art as regards the identification of perfume products envisages the use of self-adhesive labels provided with bar codes, as disclosed in US 5,345,091, or dot codes. The obvious limitation of these means consists in the ease with which they may be removed, thus making the product anonymous and resulting in loss of the data indicating its origin.

The known art also includes ink jet marking or similar systems which may also be removed by means of abrasion.

WO 2006/070148 (VALOIS SAS) discloses a prior art dispenser.

According to the invention the dispenser is characterized as described in the characterizing portion of claim 1.

The dispenser forming the subject of the present invention envisages in an embodiment thereof, which is not to be regarded as limiting, the use of a transponder 3 with RFID technology designed so that it may be mounted on the pump body of an atomizer 5. RFID, which stands for Radio Frequency Identification, is a technology used for automatically identifying objects, animals or persons. The system is based on reading remotely information contained in an RFID tag using RFID readers. An RFID tag generally consists of a microchip which contains data (including a unique universal number written in the silicon) and an antenna which allows the reception and transmission of radiofrequency waves from/to an RFID transceiver. RFID technology has some simple advantages compared to conventional bar code and magnetic band technology: it does not need to be situated close by in order to be read as in the case of magnetic bands; it does not need to be visible in order to be read, as with bar codes; information may also be added to the chip depending on the type of chip (read only, read/write); and the information may be in legible form or encrypted.

The invention will now be clarified more fully with reference to the accompanying drawings which illustrate in schematic form a preferred practical embodiment, provided solely by way of a non-limiting example since technical or constructional variations may be made without departing from the scope of the present invention, and an embodiment with a hole-type metering device as the delivery device.

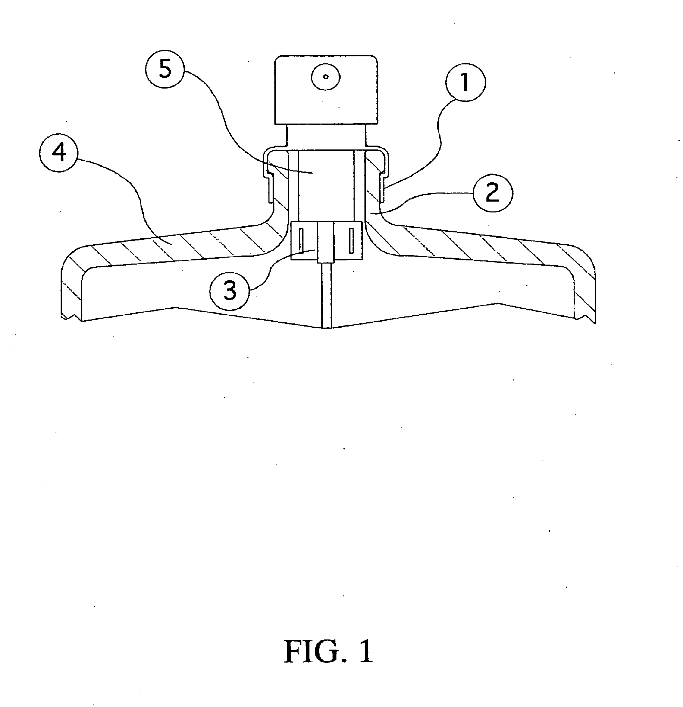

Figure 1 shows a front view of a preferred embodiment of the dispenser with identifier;

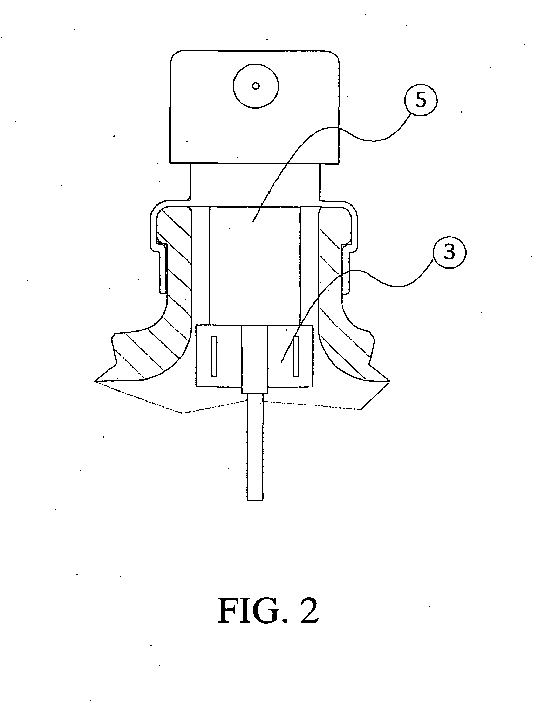

Figure 2 shows a front view of the detail relating to the delivery device;

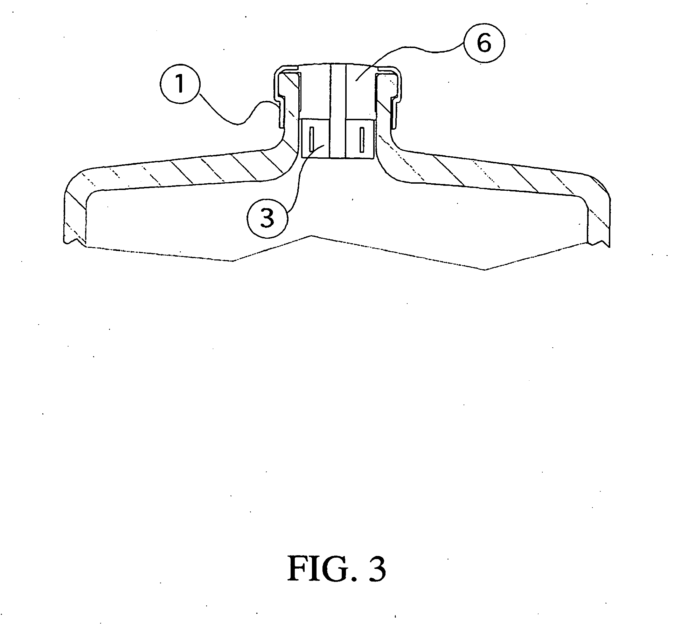

Figure 3 shows a variation of embodiment with a hole-type metering device as the delivery device.

The atomizer 5 is assembled on the bottle by means of crimping or rolling a metal collar 1 directly onto the neck of the glass bottle 2. This technique allows definitive assembly of the two parts. The transponder 3, which is a fundamental feature of the present invention, is positioned inside the bottle 4 such that it can no longer be removed without cutting the metal collar 1. The transponder 3, being situated in the compartment between the neck 4 of the bottle and the body of the atomizer 5, is therefore practically invisible.

Owing to its particular constructional configuration, it may be fitted inside the bottle 4 in direct contact with the perfume or the product for cosmetic use.

With this solution it is impossible to remove the transponder without causing obvious damage to the bottle 4 since the electronic identification device is completely incorporated and the system for fastening it to the body of the vaporizer renders it practically invisible.

Identification and writing of the information is performed using a read/write device which uses an "anti-collision" technology so as to be able to read and write a multitude of bottles 4 at the same time. This means that the boxes need not be opened but simply moved close to an antenna during the final packaging operation. The reader suitably controlled by a special computer assigns the traceability information to each bottle in a permanent manner.

Subsequently, during a market inspection, it will be possible to identify in an unambiguous manner each individual bottle 4 and trace its origin.

The abovementioned system provides a solution to the need for unique identification of each individual bottle 4, allowing, moreover, writing of specific data without physical or visual contact so as to assign in this way the traceability information without having to open the boxes containing the bottles 4. Said system, moreover, is tamper-proof since it is impossible to remove the identifier without causing permanent damage to the bottle 4. Secondly, the aesthetic impact resulting from the fitting of the identifier is minimal, such that it is practically invisible.

The advantages arising from the present invention are principally the following:
- complete fulfilment of the basic requirements mentioned above in terms of functionality and visual impact;
- guarantee of complete traceability of the products within the sales channels.

## Claims

1. Dispenser of cosmetic products and perfumes with an identifier for ensuring the traceability of a product, in particular in the sector of cosmetic products and perfumes, comprising
- a storage vessel (4) intended to contain a fluid and having an opening in the form of a neck which has an inner edge and an outer edge;
- a device (5) for delivering said fluid, in particular a pump or valve; wherein
said identifier comprises an electronic means (3) for identifying said product and a means for performing fixing to said product, said electronic means (3) being able to interact by means of electromagnetic frequencies with reading and writing means and
the fixing means being adapted to fix the identifier to said product;
wherein
said identifier is integral with the body of the delivery device (5), **characterized in that** said identifier is situated between the inner edge of the opening and the body of the delivery device (5).

2. Dispenser according to Claim 1, **characterized in that** the identifier is of the RFID type.

3. Dispenser according to one of Claims 1 or 2, **characterized in that** the delivery device (5) is an atomizer.

4. Dispenser according to one of Claims 1,2 or 3, **characterized in that** the delivery device (5) is a hole-type metering device (6).

## Patentansprüche

1. Spender für kosmetische Produkte und Parfüms mit einer Kennung um die Rückverfolgbarkeit eines Produktes zu gewährleisten, insbesondere im Sektor der kosmetischen Produkte und der Parfüms, der
- einen Lagerungsgefäss (4), der zum Enthalten einer Flüssigkeit vorgesehen ist und der mit einer Öffnung versehen ist, die die Form eines Halses hat, der einen Innenrand und einen Aussenrand hat;
- eine Vorrichtung (5) zur Verteilung der genannten Flüssigkeit, insbesondere eine Pumpe oder ein Ventil, umfasst; wobei
die genannte Kennung elektronische Mittel (3) zum Erkennen des genannten Produktes und Mittel zur Fixierung an den genannten Produkt umfasst, wobei die genannten elektronischen Mittel (3) durch elektromagnetische Frequenzen mit Lese- und Schreibmitteln interagieren können und die Fixierungsmittel dazu angepasst sind die Kennungen an den genannten Produkt zu fixieren; wobei
die genannte Kennung als Einzelstück mit dem Körper der Verteilungsvorrichtung (5) gebildet ist, **dadurch gekennzeichnet dass** die genannte Kennung zwischen dem Innenrand der Öffnung und dem Körper der Verteilungsvorrichtung (5) liegt.

2. Spender nach Anspruch 1, **dadurch gekennzeichnet dass** die Kennung des RFID Typus ist.

3. Spender nach einem der Ansprüche 1 oder 2, **dadurch gekennzeichnet dass** die Verteilungsvorrichtung (5) ein Zerstäuber ist.

4. Spender nach einem der Ansprüche 1, 2 oder 3, **dadurch gekennzeichnet dass** die Verteilugssvorrichtung (5) eine mit Loch versehenen Messvorrichtung (6) ist.

## Revendications

1. Distributeur de produits cosmétiques et de parfums avec un identificateur pour assurer la traçabilité d'un produit, en particulier dans le secteur des produits cosmétiques et des parfums, qui comprend:
- un récipient de conservation (4) prévu pour contenir un liquide et qui a une ouverture sous forme de goulot, ayant un bord intérieur et un bord extérieur;
- un dispositif (5) pour débiter le dit liquide, en particulier une pompe ou une valve; dans le quel
le dit identificateur comprend des moyens électroniques (3) pour identifier le dit produit et moyens pour accomplir le fixage au dit produit, dans lequel les dits moyens électroniques (3) peuvent interagir parmi fréquences électromagnétiques avec moyens de lecture et de écriture et dans lequel les moyens de fixage peuvent fixer l'identificateur au dit produit; dans lequel
le dit identificateur est réalisé comme une partie intégral avec le corps du dispositif de débit (5), **caractérisé en ce que** le dit identificateur est positionné entre le bord interne de l'ouverture et le corps du dispositif de débit (5).

2. Distributeur selon la revendication 1, **caractérisé en ce que** l'identificateur est du type à RFID.

3. Distributeur selon une des revendications 1 ou 2, **caractérisé en ce que** le dispositif de débit (5) est un atomiseur.

4. Distributeur selon une des revendications 1, 2 ou 3, **caractérisé en ce que** le dispositif de débit (5) est un dispositif de mesure (6) pourvu d'un trou.
